# EUROPEAN PATENT APPLICATION

(11) **EP 2 629 384 A1**
(43) Date of publication of application: **21.08.2013**
(21) Application number: 12178092.8
(22) Date of filing: 26.07.2012
(51) Int. Cl.: H02H 3/00, H02H 3/07

(54) **Protection circuit and method for protecting electrical apparatus**

(30) Priority: 17.02.2012 TW 101105184
(71) Applicant: Delta Electronics, Inc., Taoyuan Hsien 333 (TW)
(72) Inventor: Wu, Chia-Hao, 333 Taoyuan Hsien (TW)
(74) Representative: Becker Kurig Straus

(57) **Abstract**

A protection circuit includes a digital-to-analog (D/A) converter unit, a comparison unit and a processing unit. The D/A converter unit outputs an analog reference signal. The comparison unit compares a sensing signal with the analog reference signal and outputs a comparison signal when a level of the sensing signal is higher than or equal to a level of the analog reference signal. The processing unit receives the comparison signal to output an interrupt signal for temporarily deactivating a control circuit. When the control circuit is activated by an enable signal after being temporarily deactivated, the processing unit outputs a level modulation signal to the D/A converter unit, and the D/A converter unit modifies the outputted analog reference signal according to the level modulation signal. A method for protecting an electrical apparatus is also provided herein.

## Description

### BACKGROUND

### Technical Field

The present disclosure relates to a protection circuit. More particularly, the present disclosure relates to a protection circuit and a method applicable to an electrical apparatus.

### Description of Related Art

A protection circuit for a conventional electrical apparatus acquires a corresponding sensing signal by detecting various output signals outputted by the electrical apparatus, and then the protection circuit compares the sensing signal with a reference signal by way of software or hardware to determine whether the electrical apparatus is overloaded or not.

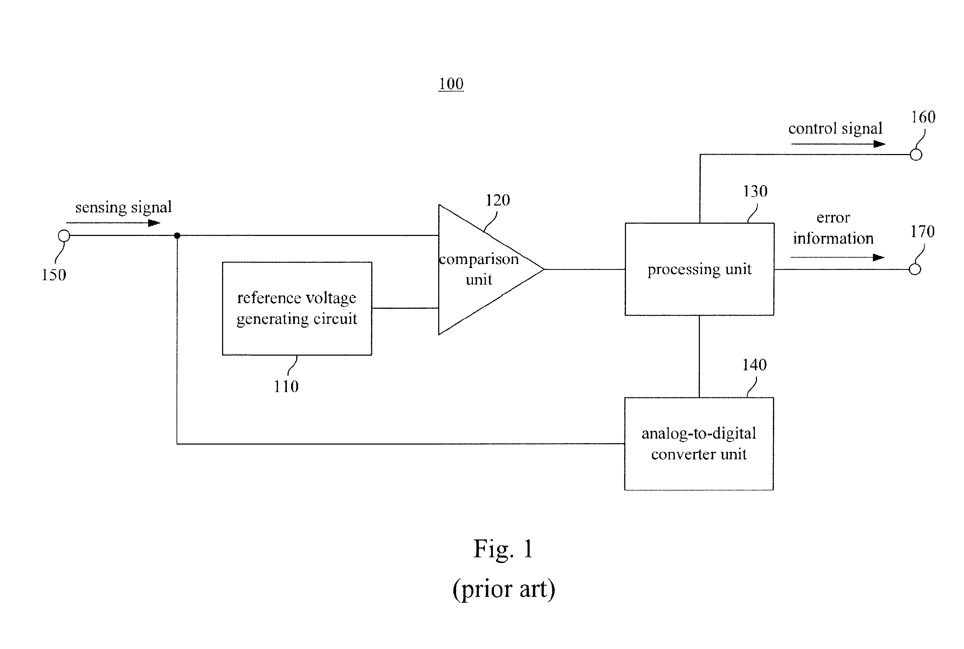

For example, Fig. 1 is a circuit block diagram illustrating a protection circuit of an electrical apparatus in prior art. The conventional protection circuit 100 includes a reference voltage generating circuit 110, a comparison unit 120, a processing unit 130 and an analog-to-digital converter unit 140. The reference voltage generating circuit 110 is configured to generate a voltage of a reference voltage level, e.g., 1.2 V, 1.8 V, 2.5 V or 3.3 V, corresponding to a protection level for the electrical apparatus.

The comparison unit 120 is configured to compare the sensing signal corresponding to the output signal outputted by the electrical apparatus, with the reference voltage level. When the output of the electrical apparatus is overloaded, the sensing signal reaches to the reference voltage level, and the comparison unit 120 outputs a corresponding comparison result to the processing unit 130. Thus, the processing unit 130 generates error information and stops outputting a control signal in order to switch off the electrical apparatus and to perform the function of circuit overload protection.

However, if the level of the sensing signal exceeds the reference voltage level because of extrinsic transient noise, the protection circuit 100 still generates the error information and stops outputting the control signal to further switch off the electrical apparatus, thus resulting in a false action of the electrical apparatus. Moreover, the protection circuit 100 has to be equipped with the reference voltage generating circuit 110, thus increasing the cost for circuit design.

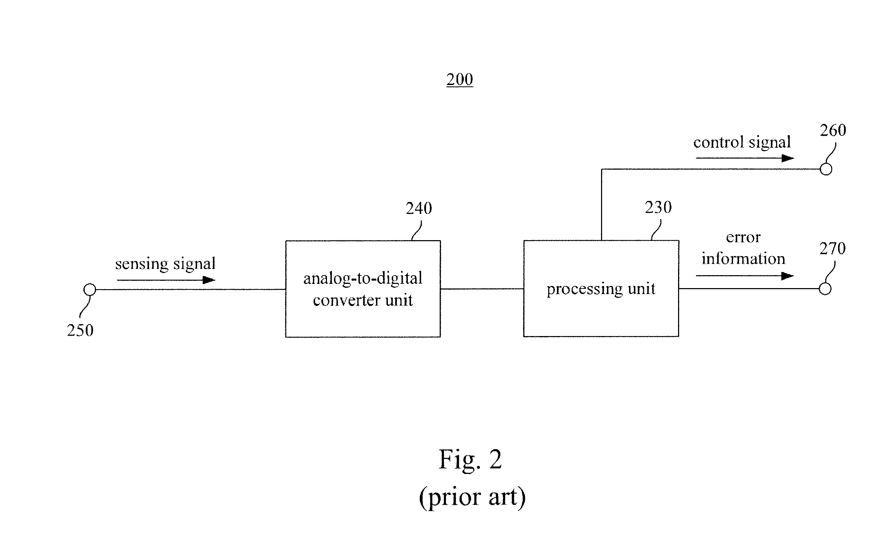

Fig. 2 is a circuit block diagram illustrating a protection circuit of another electrical apparatus in prior art. The protection circuit 200 includes an analog-to-digital converter unit 240 and a processing unit 230, in which the analog-to-digital converter unit 240 is configured to convert the sensing signal corresponding to the output signal generated by the electrical apparatus, into a digital signal transmitted to the processing unit 230 to be compared with a predetermined reference level. When the sensing signal reaches to the predetermined reference level, the processing unit 230 can generate error information and stop outputting a control signal in order to switch off the electrical apparatus, thereby performing the function of circuit overload protection. However, in the relevant art, the processing unit 230 determines, by way of polling, whether the sensing signal reaches to the predetermined reference level, and thus the period of polling operation performed by the processing unit 230 may be increased to several seconds with the complexity increase of the electrical apparatus, such that the real-time protection functionof the protection circuit 200 is weakened significantly.

Therefore, a heretofore unaddressed need exists in the art to address the aforementioned deficiencies and inadequacies.

### SUMMARY

An aspect of the present disclosure is related to a protection circuit. The protection circuit includes a digital-to-analog (D/A) converter unit, a comparison unit, and a processing unit. The digital-to-analog converter unit is configured for outputting an analog reference signal having a first level. The comparison unit is electrically coupled to the digital-to-analog converter unit and configured to compare a sensing signal with the analog reference signal, in which the comparison unit outputs a comparison signal when a level of the sensing signal is higher than or equal to the first level. The processing unit is electrically coupled to the digital-to-analog converter unit and the comparison unit, and the processing unit is configured to generate an enable signal for activating a control circuit and configured to receive the comparison signal to output an interrupt signal for temporarily deactivating the control circuit. When the control circuit is activated again by the enable signal after being temporarily deactivated, the processing unit outputs a level modulation signal to the digital-to-analog converter unit, and the digital-to-analog converter unit modifies the outputted analog reference signal according to the level modulation signal.

Another aspect of the present disclosure is related to a method for protecting an electrical apparatus. The method includes the steps as follows. A sensing signal is compared with an analog reference signal, and a comparison signal is generated when a level of the sensing signal is higher than or equal to a level of the analog reference signal. An interrupt signal is generated for temporarily deactivating a control circuit according to the comparison signal. When an enable signal for activating the control circuit is generated after the control circuit is temporarily deactivated, a level modulation signal is generated. The level of the analog reference signal is modified according to the level modulation signal.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiments, with reference to the accompanying drawings as follows:
Fig. 1 is a circuit block diagram illustrating a protection circuit of an electrical apparatus in prior art;
Fig. 2 is a circuit block diagram illustrating a protection circuit of another electrical apparatus in prior art;
Fig. 3 is a circuit block diagram illustrating a protection circuit of an electrical apparatus according to one preferred embodiment of the present disclosure;
Fig. 4 is a circuit diagram illustrating a processing unit shown in Fig. 3 according to one preferred embodiment of the present disclosure;
Fig. 5 is a circuit block diagram illustrating an electrical apparatus having a protection circuit according to another preferred embodiment of the present disclosure;
Fig. 6 is a diagram illustrating waveforms of signals when the protection circuit shown in Fig. 3 is operated;
Fig. 7 is a flow chart showing a method for protecting an electrical apparatus according to one preferred embodiment of the present disclosure; and
Fig. 8 is a flow chart showing a method for protecting an electrical apparatus according to another preferred embodiment of the present disclosure.

### DESCRIPTION OF THE EMBODIMENTS

In the following description, specific details are presented to provide a thorough understanding of the embodiments of the present disclosure. Persons of ordinary skill in the relevant art will recognize, however, that the present disclosure can be practiced without one or more of the specific details, or in combination with other components. Well-known implementations or operations are not shown or described in detail to avoid obscuring aspects of various embodiments of the present disclosure.

The terms used in this specification generally have their ordinary meanings in the art and in the specific context where each term is used. The use of examples anywhere in this specification, including examples of any terms discussed herein, is illustrative only, and in no way limits the scope and meaning of the disclosure or of any exemplified term. Likewise, the present disclosure is not limited to various embodiments given in this specification.

As used herein, the terms "comprising," "including," "having," "containing," "involving," and the like are to be understood to be open-ended, i.e., to mean including but not limited to.

Reference throughout the specification to "one embodiment" or "an embodiment" means that a particular feature, structure, implementation, or characteristic described in connection with the embodiment is included in at least one embodiment of the present disclosure. Thus, uses of the phrases "in one embodiment" or "in an embodiment" in various places throughout the specification are not necessarily all referring to the same embodiment. Furthermore, the particular features, structures, implementation, or characteristics may be combined in any suitable manner in one or more embodiments.

In the following description and claims, the terms "coupled" and "connected", along with their derivatives, may be used. In particular embodiments, "connected" and "coupled" may be used to indicate that two or more elements are in direct physical or electrical contact with each other, or may also mean that two or more elements may not be in direct contact with each other. "Coupled" may still be used to indicate that two or more elements cooperate or interact with each other.

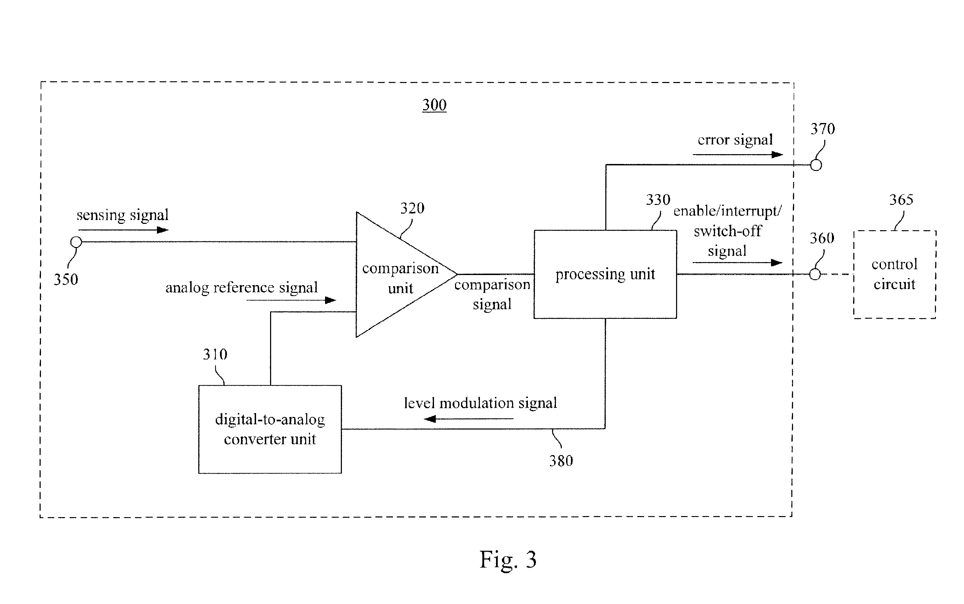

Fig. 3 is a circuit block diagram illustrating a protection circuit of an electrical apparatus according to one preferred embodiment of the present disclosure. The protection circuit 300 includes a digital-to-analog converter unit 310, a comparison unit 320 and a processing unit 330. The digital-to-analog converter unit 310, the comparison unit 320 and the processing unit 330 are electrically coupled to one another to form a closed loop.

In addition, the protection circuit 300 includes an input terminal 350, a first output terminal 360 and a second output terminal 370, in which the input terminal 350 is configured to receive a sensing signal, and the sensing signal is an analog signal corresponding to at least one of a detected voltage signal, a detected current signal, a detected power signal and a detected temperature signal. The first output terminal 360 is connected to a control circuit 365, and the second output terminal 370 is connected to a user interface.

As shown in Fig. 3, the digital-to-analog converter unit 310 is configured to output an analog reference signal, and the comparison unit 320 is electrically coupled to the digital-to-analog converter unit 310 and configured to compare the sensing signal with the analog reference signal. In normal operation, the level of the sensing signal is lower than the level of the analog reference signal, and in abnormal operation (e.g., the voltage, current or temperature is too high), the level of the sensing signal is higher than or equal to the level of the analog reference signal. When the level of the sensing signal is higher than or equal to the level of the analog reference signal, the comparison unit 320 outputs a comparison signal. Moreover, the processing unit 330 is electrically coupled to the digital-to-analog converter unit 310 and the comparison unit 320. In normal operation, the processing unit 330 is configured to generate an enable signal outputted through the first output terminal 360, for activating the control circuit 365 (e.g., a pulse width modulation control circuit) that is disposed outside the protection circuit 300. In abnormal operation, the processing unit 330 is configured to receive the comparison signal to output an interrupt signal for temporarily deactivating the control circuit 365 (or further temporarily deactivating the operation of the entire system).

Furthermore, when the control circuit 365 is activated again by the enable signal after being temporarily deactivated, the processing unit 330 outputs a level modulation signal to the digital-to-analog converter unit 310 through a feedback path 380, and the digital-to-analog converter unit 310 modifies the outputted analog reference signal according to the level modulation signal.

In practice, the digital-to-analog converter unit 310 and the comparison unit 320 can be implemented in the form of circuits or by way of other hardwares (for example, a digital-to-analog converter circuit and a comparator circuit), and the processing unit 330 can be implemented by way of hardware with software; however, the present disclosure is not limited thereto.

In one preferred embodiment, the digital-to-analog converter unit 310, the comparison unit 320 and the processing unit 330 are integrated in a micro-controller or a micro-controller unit (MCU). Therefore, the analog signal can be processed by the digital-to-analog converter unit 310 and the comparison unit 320 in the micro-controller, such that the speed of processing signals can be increased for allowing the abnormal operation (e.g., over-voltage, over-current, etc.) to be instantly and efficiently determined by the processing unit 330, and then the processing unit 330 can rapidly interrupt the operation of the control circuit 365 or further switch off (or shuts down) the control circuit 365 to prevent the control circuit 365 from being damaged and to avoid causing damages to the entire system.

In another preferred embodiment, the aforementioned protection circuit 300 is implemented by using a micro-controller; that is, the mechanism that the protection circuit 300 determines the sensing signal to further protect the entire system, is directly implemented by the micro-controller.

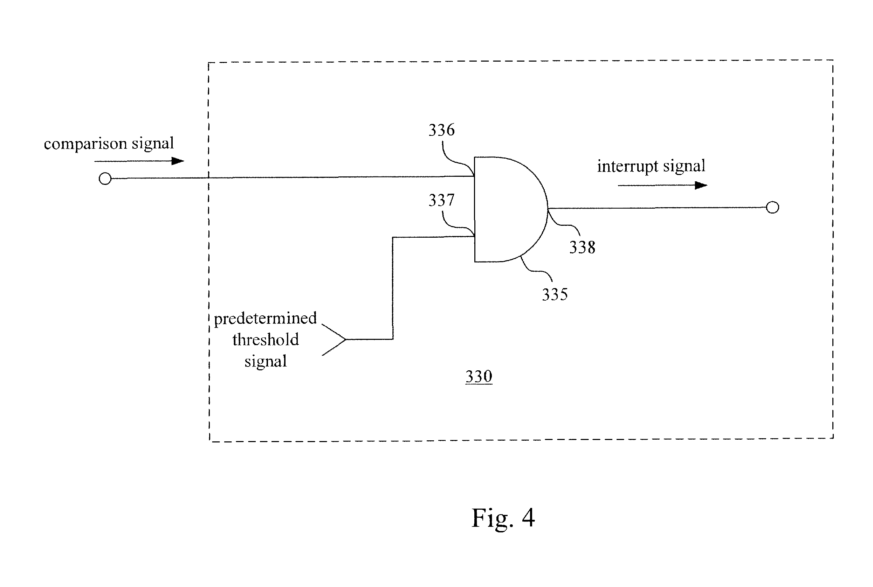

Fig. 4 is a circuit diagram illustrating the processing unit shown in Fig. 3 according to one preferred embodiment of the present disclosure. As shown in Fig. 4, the processing unit 330 includes an AND gate 335, and the AND gate 335 has a first gate input terminal 336, a second gate input terminal 337 and a gate output terminal 338, in which the first gate input terminal 336 is configured to receive the comparison signal outputted by the comparison unit 320, the second gate input terminal 337 is configured to receive a predetermined threshold signal, and the gate output terminal 338 is configured to output the interrupt signal. In general, the predetermined threshold signal can be preset according to different conditions or practical needs; for example, the predetermined threshold signal can be preset corresponding to a threshold current value of 900 amps.

In operation, when an abnormal condition (e.g., over-current) occurs, the comparison unit 320 accordingly outputs the comparison signal (i.e., the signal having a high logic level), and meanwhile the predetermined threshold signal (e.g., a high logic level signal corresponding to the threshold current value of 900 amps) is also generated correspondingly. Then, the AND gate 335 performs a logical operation with respect to the comparison signal and the predetermined threshold signal to generate the corresponding high logic level signal as the interrupt signal, thereby temporarily deactivating the external control circuit and its operation, or further temporarily deactivating the operation of the entire system.

It is noted that, the comparison signal also can be directly outputted as the interrupt signal without being processed by the processing unit 330, so as to temporarily deactivate the external control circuit and its operation, or to further temporarily deactivate the operation of the entire system.

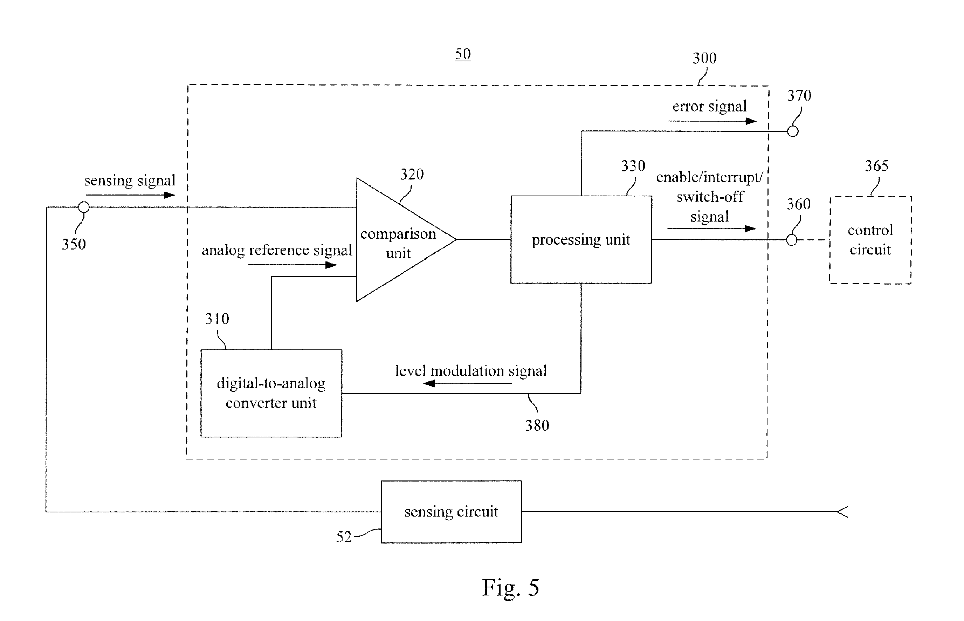

Fig. 5 is a circuit block diagram illustrating an electrical apparatus having the protection circuit according to another preferred embodiment of the present disclosure. In the present preferred embodiment, an electrical apparatus 50 includes a sensing circuit 52 and the protection circuit 300 as shown in Fig. 3, in which one terminal of the sensing circuit 52 is electrically connected to the input terminal 350 of the protection circuit 300, and the other terminal of the sensing circuit 52 is connected to the portion required to be sensed in the electrical apparatus 50. After sensing relative parameters such as voltage, current, temperature, etc., of the portion in the electrical apparatus 50 required to be sensed, the sensing circuit 52 outputs the sensing signal to the input terminal 350 of the protection circuit 300. In the present embodiment, the structure and configuration of the protection circuit 300 are similar to those shown in the aforementioned embodiments, and thus not described in further detail herein.

In another preferred embodiment, the processing unit 330 determines whether or not to output a switch-off signal for switching off the control circuit 365 to completely stop the operation of the control circuit 365(or the entire system) according to a number of times of receiving the comparison signal. Specifically, the processing unit 330 outputs the level modulation signal to the digital-to-analog converter unit 310, and the digital-to-analog converter unit 310 modifies the outputted analog reference signal according to the level modulation signal, such that the analog reference signal has different levels. Then, the comparison unit 320 compares the sensing signal with the analog reference signal, and also outputs the comparison signal when the level of the sensing signal is higher than or equal to the level of the analog reference signal. The processing unit 330 then outputs the interrupt signal for temporarily deactivating the control circuit 365 according to the comparison signal. The above steps are repeated analogously, and the processing unit 330 further determines the number of times of receiving the comparison signal, and outputs the switch-off signal for switching off the control circuit 365 when the number of times of receiving the comparison signal reaches to a predetermined number of times (e.g., 3 times). In this situation, the electrical apparatus 50 is shut down.

In still another preferred embodiment, when the processing unit 330 outputs the switch-off signal for switching off the control circuit 365, the processing unit 330 outputs an error signal through the second output terminal 370 for audio warning or a display on a user interface to inform a user.

As a result, the control circuit 365 can be temporarily deactivated by the interrupt signal in advance to determine whether the abnormal condition actually occurs, or whether the abnormal condition is caused by noise and surge interference, and the control circuit 365 or the entire system is directly switched off (or shut down) after the abnormal condition is confirmed and the control circuit 365 is temporarily deactivated for several times, thereby preventing the control circuit 365 or the entire system from being damaged due to continuous operation.

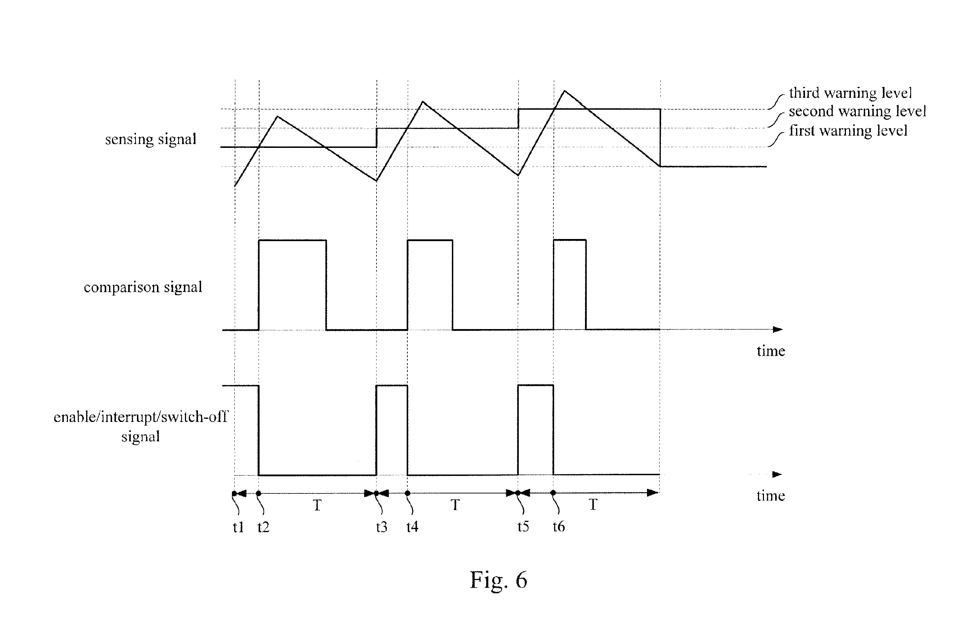

Hereinafter, one embodiment of the present disclosure is used to explain the operation of the protection circuit 300 shown in Fig. 3. Fig. 6 is a diagram illustrating waveforms of signals when the protection circuit shown in Fig. 3 is operated. Referring to Fig. 3 and Fig. 6, at time point t1, the analog reference signal has a first warning level, and the processing unit 330 generates the enable signal (i.e., a high level signal) in normal operation to activate the control circuit 365 (e.g., a pulse width modulation control circuit) outside the protection circuit 300.

Then, at time point t2, when an abnormal condition (e.g., over-current) occurs, the level of the corresponding sensing signal rises to be equal to or higher than a first warning level, and the comparison unit 320 correspondingly outputs the comparison signal at the moment, and the processing unit 330 correspondingly outputs the interrupt signal (i.e., a low level signal) to temporarily deactivate the operation of the control circuit 365 or the entire system.

It is noted that, a high-level state and a low-level state of the same control signal may represent the enable signal and the interrupt signal respectively, but different signals may also be configured as the enable signal and the interrupt signal, respectively, according to practical needs. Moreover, in a predetermined time period after the processing unit 330 outputs the interrupt signal, the processing unit 330 resumes outputting the enable signal (at time point t3).

In addition, at time point t3, the processing unit 330 outputs the level modulation signal to the digital-to-analog converter unit 310 through the feedback path 380, and the digital-to-analog converter unit 310 modifies the outputted analog reference signal according to the level modulation signal, such that the analog reference signal has a second warning level, and the second warning level is higher than the first warning level.

The comparison unit 320 then compares the sensing signal with the analog reference signal having the second warning level. Afterward, at time point t4, when the abnormal condition (e.g., over-current) occurs again, the level of the corresponding sensing signal rises to be equal to or higher than the second warning level, and the comparison unit 320 correspondingly outputs the comparison signal at the moment, and the processing unit 330 correspondingly outputs the interrupt signal (i.e., the low level signal) to temporarily deactivate the operation of the control circuit 365 or the entire system.

It is noted that, if the processing unit 330 determines that the number of times of receiving the comparison signal reaches to a predetermined number of times (e.g., 2 times) at the moment, the processing unit 330 may be switched to output the switch-off signal (i.e., the low level signal) to switch off the control circuit 365, and the processing unit 330 resumes outputting the enable signal in a predetermined time period after the processing unit 330 outputs the interrupt signal, in which the time period can be predetermined in the processing unit 330 to achieve the effect of resuming generating the enable signal.

On the other hand, in the condition of the processing unit 330 determining that the number of times of receiving the comparison signal reaches to a predetermined number of times (e.g., 3 times), at time point t5, the processing unit 330 outputs the level modulation signal to the digital-to-analog converter unit 310 through the feedback path 380 again, and the digital-to-analog converter unit 310 modifies the outputted analog reference signal according to the level modulation signal again, such that the analog reference signal has a third warning level, and the third warning level is higher than the second warning level.

The comparison unit 320 then compares the sensing signal with the analog reference signal having the third warning level again. Afterward, at time point t6, when the abnormal condition occurs again, the level of the corresponding sensing signal rises to be equal to or higher than the third warning level, and the comparison unit 320 correspondingly outputs the comparison signal at the moment. The processing unit 330 determines that the number of times of receiving the comparison signal reaches to the predetermined number of times (e.g., 3 times), and the processing unit 330 outputs the switch-off signal (i.e., the low level signal) to switch off (or shut down) the operation of the control circuit 365 or the entire system according to the comparison signal.

It is noted that, different low-level states (e.g., different durations of low-level states) of the same control signal may represent the interrupt signal and the switch-off signal, respectively, but different signals may also be configured as the interrupt signal and the switch-off signal, respectively, according to practical needs.

Moreover, when the operation of the control circuit 365 or the entire system is switched off, the processing unit 330 may also output the error signal through the second output terminal 370 to a user interface or an operation interface, thereby informing a system side of the abnormal condition that has already occurred.

On the other hand, in some preferred embodiments, the processing unit 330 generates the level modulation signal for the digital-to-analog converter unit 310 by way of a software configuration, or the processing unit 330 flexibly generates the level modulation signal by way of a dynamic learning mechanism (e.g., neural control or fuzzy control) or an experience accumulation mechanism. The termed dynamic learning mechanism and experience accumulation mechanism herein indicate that the level modulation signal is generated by way of software incorporating environment parameters, predetermining a number of reference levels, utilizing a look-up table (LUT) or collaborating with the mechanisms such as the neural control or the fuzzy control, so as to achieve the effect of outputting a best reference level. Therefore, the aforementioned manner can be used for allowing the analog reference signal to be flexibly modified or relaxed to exclude the misjudgment of the abnormal operation caused by transient noise.

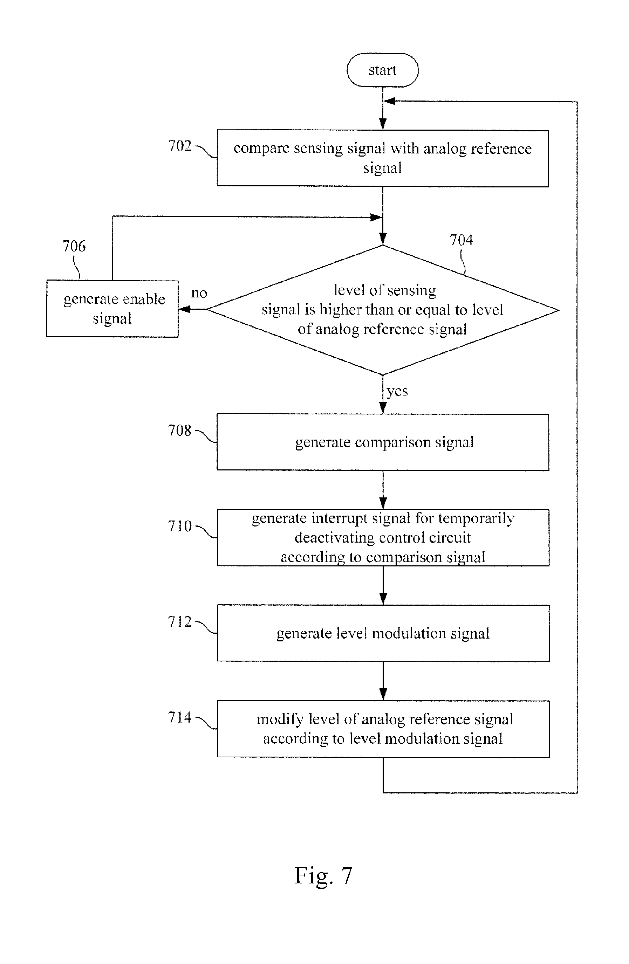

Fig. 7 is a flow chart showing a method for protecting an electrical apparatus according to one preferred embodiment of the present disclosure. First, a sensing signal is compared with an analog reference signal (Step 702), and then whether a level of the sensing signal is higher than or equal to a level of the analog reference signal is determined (Step 704), in which the sensing signal is an analog signal corresponding to at least one of a voltage signal, a current signal, a power signal and a temperature signal.

When the level of the sensing signal is lower than the level of the analog reference signal, an enable signal is continuously generated for a control circuit (e.g., a pulse width modulation control circuit) (Step 706), and the operation returns back to Step 704 so that whether the level of the sensing signal is higher than or equal to the level of the analog reference signal is determined again. When the level of the sensing signal is higher than or equal to the level of the analog reference signal (e.g., the voltage, current or temperature is too high in the abnormal condition), a comparison signal is generated (Step 708), and an interrupt signal is generated for temporarily deactivating the control circuit according to the comparison signal (Step 710).

Afterward, when the generation of the enable signal for activating the control circuit is resumed in a predetermined time period after the control circuit is temporarily deactivated, a level modulation signal is generated (Step 712), and then the level of the analog reference signal is modified according to the level modulation signal (Step 714), such that the analog reference signal can further be compared with the sensing signal again. Then, after the level of the analog reference signal is modified, the operation returns back to Step 702, and Step 702 through Step 714 are performed again, which may be deduced by analogy.

It is noted that, after Step 702 through Step 714 are performed repeatedly for several times, a switch-off signal for switching off the control circuit (or the entire system) may also be generated according to the comparison signal after Step 708, so as to finish the aforementioned process. Furthermore, the time period can be predetermined in a processing unit to achieve the effect of resuming generating the enable signal.

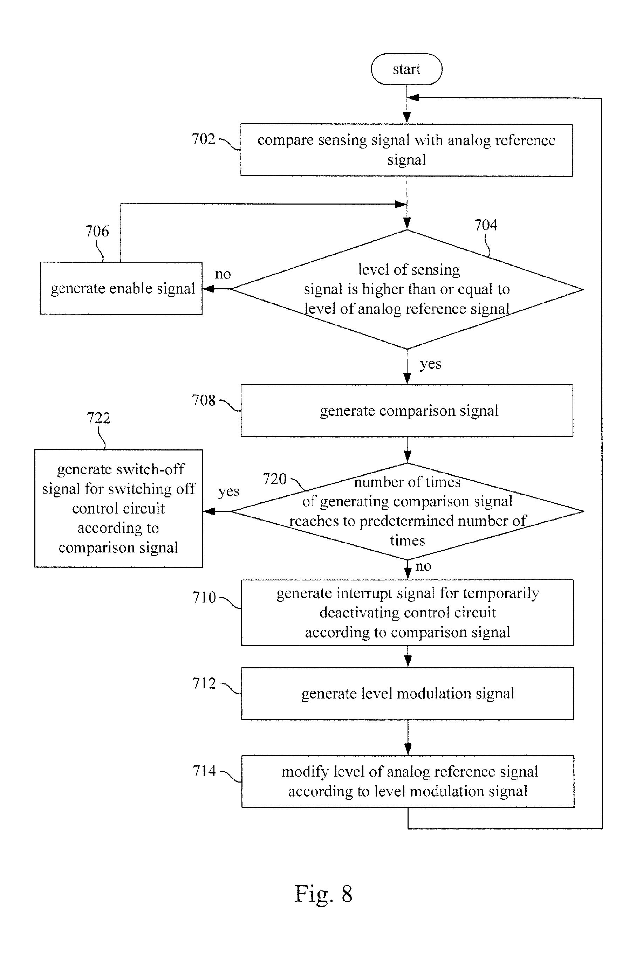

Fig. 8 is a flow chart showing a method for protecting an electrical apparatus according to another preferred embodiment of the present disclosure. Compared to Fig. 7, in the present embodiment, the protection method further includes the steps as follows. After Step 708, whether a number of times of generating the comparison signal reaches to a predetermined number of times (e.g., 3 times) is determined (Step 720). When the number of times of generating the comparison signal does not reach to the predetermined number of times, the interrupt signal is generated for temporarily deactivating the control circuit according to the comparison signal, as preformed in Step 710. On the contrary, when the number of times of generating the comparison signal reaches to the predetermined number of times, a switch-off signal is generated for switching off the control circuit according to the comparison signal (Step 722).

On the other hand, in the embodiments as shown in Fig. 7 or Fig. 8, the protection method may further include the steps as follows. When the number of times of generating the comparison signal reaches to the predetermined number of times, an error signal is generated for warning, or the error signal is outputted to a user interface or an operation interface for informing a system side of the abnormal condition (e.g., the voltage, current, or temperature is too high) that has already occurred. In another preferred embodiment, the protection method may further include the step of generating the error signal when the interrupt signal is generated for temporarily deactivating the control circuit at each time.

Furthermore, in the embodiments as shown in Fig. 7 or Fig. 8, Step 702, Step 704 and Step 708 are performed by a comparison unit, Step 706, Step 720, Step 710, Step 712 and Step 722 are performed by a processing unit, and Step 714 is performed by a digital-to-analog converter unit, in which the comparison unit, the processing unit and the digital-to-analog converter unit are integrated in a micro-controller or a micro-controller unit (MCU) in one preferred embodiment.

Moreover, the protection method as shown in Fig. 7 or Fig. 8 is also applicable to the embodiment as shown in Fig. 3; that is, the comparison unit 320, the processing unit 330 and the digital-to-analog converter unit 310 in Fig. 3 are used to perform the steps mentioned above.

Compared to prior art, in the embodiments of the present disclosure, the digital-to-analog converter unit (e.g., digital-to-analog converter circuit) and the comparison unit (e.g., comparator circuit) can be integrated and built in the micro-controller without increasing the cost of circuits, so as to process analog signals via the digital-to-analog converter unit and the comparison unit, such that the speed of processing signals can be increased, and the abnormal operation (e.g., over-voltage, over-current, etc.) can be instantly and efficiently confirmed to further interrupt the operation of the control circuit outside the micro-controller, or to further switch off (or shuts down) the control circuit, thus preventing the control circuit from being damaged and avoiding causing damages to the entire system.

In addition, the level of the analog reference signal outputted by the digital-to-analog converter unit can further be flexibly modified by way of the dynamic learning mechanism or the experience accumulation mechanism in the aforementioned protection circuit, such that the electrical apparatus can generate fine tuning output signals according to different application environments. Moreover, using digital feedback to modify the level of the analog reference signal outputted by the digital-to-analog converter unit can decrease the complexity of circuits and reduce the reference level shift caused by deviations of fabrication process or devices.

Furthermore, the software and hardware protection mechanisms both are configured in the present disclosure, such that the operation of the control circuit can be temporarily deactivated by the output of the hardware immediately when the error occurs, and then the reference level is gradually modified and relaxed by way of software configuration, to confirm whether the abnormal condition certainly occurs, or whether the abnormal condition is caused by noise and surge interference, and the control circuit or the entire system is directly switched off (or shut down) after the abnormal condition is confirmed and the control circuit is temporarily deactivated for several times, to prevent the control circuit or the entire system from operating continuously to be damaged.

The steps are not necessarily recited in the sequence in which the steps are performed. That is, unless the sequence of the steps is expressly indicated, the sequence of the steps is interchangeable, and all or part of the steps may be simultaneously, partially simultaneously, or sequentially performed.

## Claims

1. A protection circuit, comprising:
a digital-to-analog converter unit for outputting an analog reference signal, the analog reference signal having a first level;
a comparison unit electrically coupled to the digital-to-analog converter unit and configured to compare a sensing signal with the analog reference signal, wherein the comparison unit outputs a comparison signal when a level of the sensing signal is higher than or equal to the first level; and
a processing unit electrically coupled to the digital-to-analog converter unit and the comparison unit, wherein the processing unit is configured to generate an enable signal for activating a control circuit and configured to receive the comparison signal to output an interrupt signal for temporarily deactivating the control circuit;
wherein when the control circuit is activated again by the enable signal after being temporarily deactivated, the processing unit outputs a level modulation signal to the digital-to-analog converter unit, and the digital-to-analog converter unit modifies the outputted analog reference signal according to the level modulation signal.

2. The protection circuit as claimed in claim 1, wherein the analog reference signal has a second level after being modified, and the second level is higher than the first level.

3. The protection circuit as claimed in claim 2, wherein the comparison unit is further configured to compare the sensing signal with the analog reference signal having the second level and configured to output the comparison signal when the level of the sensing signal is higher than or equal to the second level, and the processing unit is configured to temporarily deactivate or switch off the control circuit according to the comparison signal.

4. The protection circuit as claimed in claim 3, wherein the processing unit outputs the level modulation signal to the digital-to-analog converter unit when the control circuit is temporarily deactivated, and the digital-to-analog converter unit modifies the outputted analog reference signal according to the level modulation signal such that the analog reference signal has a third level, wherein the third level is higher than the second level.

5. The protection circuit as claimed in claim 4, wherein the comparison unit is further configured to compare the sensing signal with the analog reference signal having the third level and configured to output the comparison signal when the level of the sensing signal is higher than or equal to the third level, and the processing unit outputs a switch-off signal for switching off the control circuit according to the comparison signal.

6. The protection circuit as claimed in claim 1, wherein the processing unit determines whether or not to output a switch-off signal for switching off the control circuit according to a number of times of receiving the comparison signal, and when the processing unit outputs the switch-off signal for switching off the control circuit, the processing unit further outputs an error signal.

7. The protection circuit as claimed in claim 1, wherein the processing unit further comprises:
an AND gate having a first gate input terminal, a second gate input terminal and a gate output terminal, wherein the first gate input terminal is configured to receive the comparison signal, the second gate input terminal is configured to receive a predetermined threshold signal, and the gate output terminal is configured to output the interrupt signal.

8. The protection circuit as claimed in claim 1, wherein the digital-to-analog converter unit, the comparison unit and the processing unit are integrated in a micro-controller.

9. The protection circuit as claimed in claim 1, wherein the sensing signal corresponds to at least one of a voltage signal, a current signal, a power signal and a temperature signal.

10. The protection circuit as claimed in claim 1, wherein the processing unit generates the level modulation signal by way of a software configuration or a dynamic learning mechanism.

11. A method for protecting an electrical apparatus, the method comprising:
(a) comparing a sensing signal with an analog reference signal, and generating a comparison signal when a level of the sensing signal is higher than or equal to a level of the analog reference signal;
(b) generating an interrupt signal for temporarily deactivating a control circuit according to the comparison signal;
(c) when an enable signal for activating the control circuit is generated after the control circuit is temporarily deactivated, generating a level modulation signal; and
(d) modifying the level of the analog reference signal according to the level modulation signal.

12. The method as claimed in claim 11, further comprising:
after the analog reference signal is modified, performing the steps (a) through (d) again.

13. The method as claimed in claim 12, further comprising:
after the steps (a) through (d) are performed again, performing the step (a); and
generating a switch-off signal for switching off the control circuit according to the comparison signal.

14. The method as claimed in claim 11, further comprising:
determining whether a number of times of generating the comparison signal reaches to a predetermined number of times;
when the number of times of generating the comparison signal reaches to the predetermined number of times, generating a switch-off signal for switching off the control circuit; and
when the number of times of generating the comparison signal reaches to the predetermined number of times, generating an error signal for warning.

15. The method as claimed in claim 11, wherein the step (a) is performed by a comparison unit, the steps (b) and (c) are performed by a processing unit, the step (d) is performed by a digital-to-analog converter unit, and the digital-to-analog converter unit, the comparison unit, and the processing unit are integrated in a micro-controller.
